# EUROPEAN PATENT SPECIFICATION

(11) **EP 0 683 944 B1**
(45) Date of publication and mention of the grant of the patent: **08.09.1999**
(21) Application number: 94906319.2
(22) Date of filing: 14.02.1994
(51) Int. Cl.: H04H 3/00, H04B 7/26

(54) **IMPROVEMENTS RELATING TO DUPLEX COMMUNICATIONS SYSTEMS**
VERBESSERUNGEN AN DUPLEX FERNMELDESYSTEMEN
AMELIORATIONS APPORTEES A DES SYSTEMES DE COMMUNICATIONS DUPLEX

(30) Priority: 15.02.1993 GB 9302975
(43) Date of publication of application: 29.11.1995
(73) Proprietor: LUCENT TECHNOLOGIES INC., Murray Hill, New Jersey 07974-0636 (US)
(72) Inventor: BEESLEY, Graham, Edgar, Hampshire SO21 2NJ (GB)
(74) Representative: Boydell, John Christopher
(86) International application number: GB9400295
(87) International publication number: WO9418764

(56) References cited:
- EP-A- 0 042 144
- EP-A- 0 197 556
- EP-A- 0 414 409
- WO-A-91/03136
- US-A- 4 718 109

## Description

The present invention relates to duplex communications systems, and in particular to the digital time-division duplex radio communication system which is established between one of a plurality of portable units and one or more base units forming a cordless telephone system.

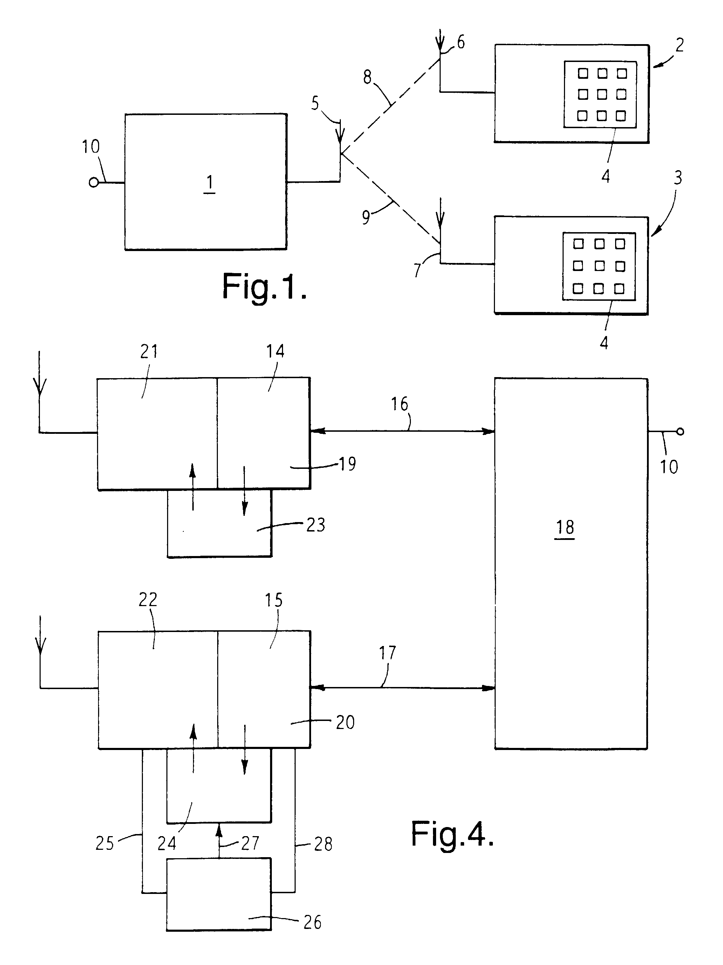

Such a system is shown, in its simplest form, in Figure 1 of the accompanying drawings to which reference will now be made. The system illustrated comprises a fixed part in the form of a base unit 1, and two portable parts in the form of respective handsets 2,3. Each handset comprises an earpiece, microphone and keypad, this latter being shown diagrammatically under reference 4. In addition, each handset contains a respective radio transmitter/ receiver (transceiver) and associated aerial 6,7 by which the handsets may communicate with the base unit by radio, as represented by the dotted lines 8,9. The base unit likewise contains a number of transceivers at least equal to the number of handsets, together with an aerial 5 for transmission and reception of radio signals from the handsets. The handsets may communicate with each other, but only via the base unit. The base unit also includes a hard-wired connection 10 to the external telephone system, and contains interface circuitry for interfacing the base unit transceiver to the external telephone line. Although only one base unit and two handsets are shown, this is to be taken as an example of the simplest system. The present invention is concerned primarily with a more complicated system involving a plurality of base units forming part of a network in which each base unit is able to communicate with a plurality of handsets.

In such systems, the speech and other information to be transmitted between the or each base unit and the handsets is digitally encoded before transmission, is transmitted as a digital signal, and is decoded after reception to reproduce the original. A limited number of radio channels are allocated for the radio links 8,9 and it is clearly therefore preferable to utilise the same channel for both ends of a radio link - i.e. duplex communication. Each transceiver in the system will be able to transmit and receive on a number of these channels, if not all.

In digital second generation (CT2) cordless telephone systems, burst mode duplex is used to provide full duplex speech on a single channel - see for example EP-A-0 414 409. This essentially means that each transmitter has to compress the encoded speech from a particular time interval (called the burst period) down to just under half that interval (called the burst duration) in order to transmit the encoded speech and have time to receive the returning encoded speech in the other half of the burst period. This action is commonly called ping-pong transmission mode. it should be noted that the encoded speech corresponds to the speech from the entire burst period and on reception is expanded to its normal representation as continuous speech.

There has been established a common protocol for the exchange of signals, primarily control and synchronising signals, between the fixed and portable parts of the system. In the case of CT2, this protocol, known as a common air interface (CAI), is described in detail in international patent application WO90/09071. The present applicant's own air interface, a variant of the common air interface is described in European patent application 0375361.

In the common protocol, exchange of signals is by way of three distinct transmitted burst signal patterns or structures exchanged between the fixed and portable parts of the system. These different burst structures are known respectively as MUX3, MUX2 and MUX1, the acronym "MUX" standing for multiplex. In addition, the agreed protocol defines three sub-channels to be multiplexed within the available data bandwidth:-
i) a signalling channel (D channel);
ii) a speech channel (B channel;
iii) a burst synchronisation channel (SYN channel) containing bit and burst synchronising information.

The structure of the various multiplexes is described in detail in the above-mentioned patent applications. Briefly the arrangement of sub channels within the multiplexes is as follows:

MUX1 is used bi-directionally over an already-established link between a portable part and a fixed part to carry the D and B channels. There are no SYN channel bits in MUX1. MUX1 supports both the 66 bit and 68 bit length burst structures defined in the protocol: MUX 1.4 is 68 bits long, having 64 B bits, with 2 D bits at either end; and MUX1.2 is 66 bits long, having 64 B bits, with 1 D bit at either end.

MUX2 is used for link establishment, and for re-establishment of a previously-broken link. MUX2 comprises 34 bits in the SYN channel sandwiched between 32 bits (16 at each end) in the D channel - i.e. 66 bits long. There are no B channel bits in MUX2.

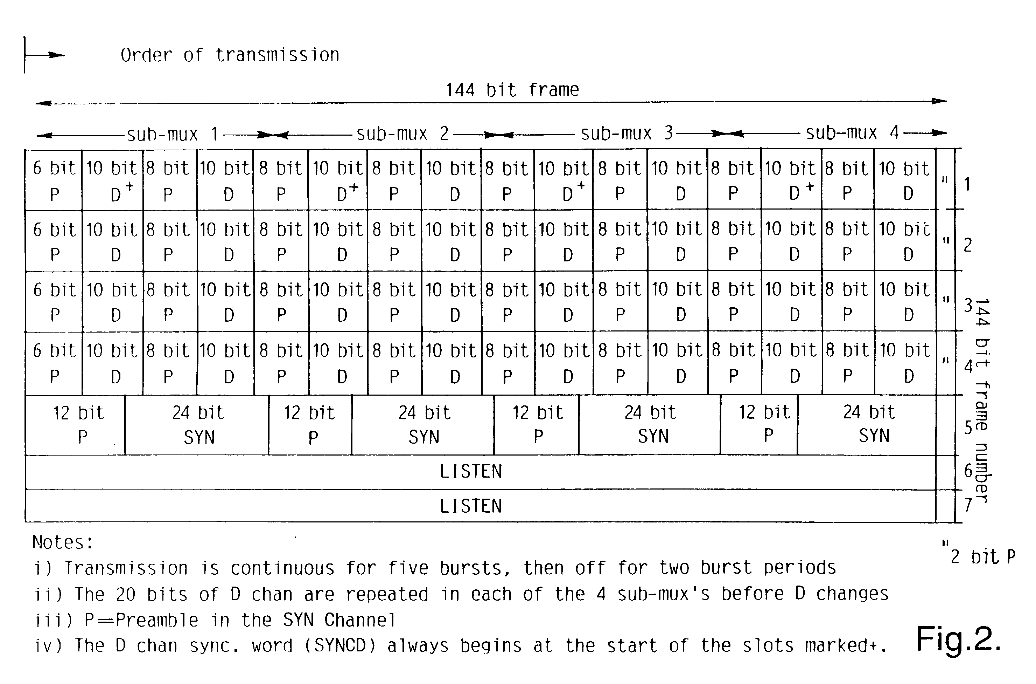

MUX3 is used for link establishment and re-establishment in the direction portable part to fixed part only. A representation of MUX3 is shown in Figure 2 and will be seen to comprise seven frames, numbered 1 to 7 down the right-hand side, each 144 bits long. The first four frames, 1 to 4, contain D-channel bits. and comprise 20 bit D-channel words each split into two 10-bit sections surrounded by preamble (P) bits. The fifth frame comprises 24 SYN channel bits surrounded by 24 preamble (P) bits (12 at each end). During frames 6 and 7, the transceiver in the portable part listens for a response from a fixed part.

The MUX3 transmission is thus a 10 ms transmit followed by a 4 ms receive and, in practice, this is repeated for a period of at least 750 ms, or until a link is established.

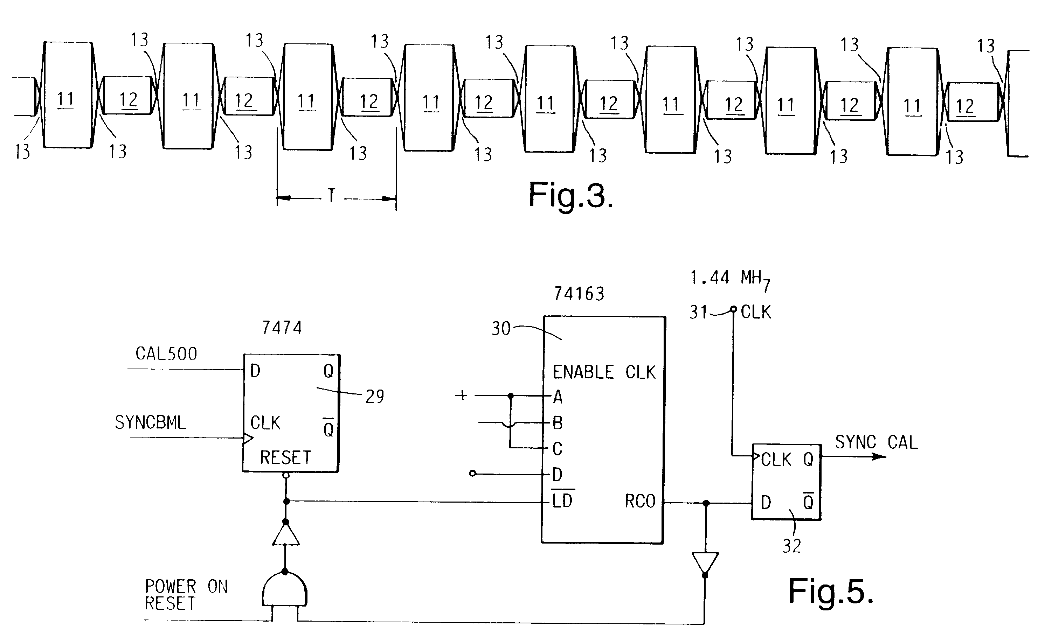

It will be seen from the foregoing that transmission and reception as between the or each base unit and each portable unit is by way of alternate transmission and reception; at any one instant of time, one end of the radio link will be transmitting, while the other receives. A diagram of typical R.F. envelopes for base unit/portable unit transmissions is given in Figure 3, by way of illustration. In Figure 3 the horizontal axis represents time. The transmission envelopes are the wider envelopes shown under reference 11. The envelopes 12 represent reception which, as can be seen, alternates with transmission. In between the end of each transmission or reception envelope and the start of the next envelope is a short period, known as the guard band 13, during which neither transmission nor reception is taking place. The guard band 13 gives the opportunity for the circuits within the transceiver to recover from one mode, and build up to the next.

Figure 3 shows an established link operating in MUX1 or MUX2, using a frame time T typically of 2 ms.

In a system incorporating a plurality of CT2 or other TDMA base units there is advantage to synchronising the transmission and reception phases of the base units so that disruption due to AM splatter introduced by the on-off action of the transmitter is relegated to the guard band and is thus rendered harmless. Additionally it is best to arrange that all the base units transmit together and receive together. This helps to reduce the problems of blocking and adjacent channel modulation spread which occur and are a problem for close sited units. Base units are often sited in groups and are prone to this problem. The conventional solution is to use a wired synchronising signal which is of a suitable frequency and is of known phase relationship to the transmit/ receive timing. An example of a suitable synchronising signal for the CT2 common air interface is described in annex N of the Interim European Telecommunication Standard No. I-ETS 300 131 R1. This signal has a 2 ms frame, and comprises a 500 Hz square wave with the positive going edge defined as a fixed relationship to the transmit start time. On-air solutions exist which derive such a consistent signal from a standard transmission such as a local television station or a standard frequency transmission. In both the above methods the phase and frequency of the synchronising signal is derived from a common source available to all the base stations in the network on a continuous basis.

In the present invention, synchronisation is achieved by obtaining the phase from a master CT2 or TDMA transmission and the frequency from a common or system clock. The advantage obtained by splitting the information in this way is that the common or system clock need not be controlled to have a known phase relationship to the transmission, indeed the clock can exhibit a different phase at each base unit in the network without any detriment. The master transmission is only required briefly to initialise the system and to establish the relationship of each individual base unit's transmit period to the clock. This can be considered as a snapshot synchronisation.

According to a first embodiment of the present invention there is provided a duplex communications system for establishing radio transmission and reception between one of a plurality of portable units and one or more of a plurality of base units, said system comprising means for generating a synchronising signal operable to synchronise the operation of the base units, the system being characterised by means for generating a first synchronising signal operable to control the frequency of operation of the base units and a second synchronising signal operable to control the phase of the base unit transmission.

According to a second embodiment of the present invention there is provided a method of synchronising a plurality of base units of a duplex communications system for establishing radio transmission and reception between one of a plurality of portable units and one or more of the plurality of base units, said method comprising the steps of generating a first synchronising signal operable to control the frequency of operation of the base units and generating a second synchronising signal separate from the first, said second signal being operable to control the phase of transmission of the base units.

There are many options for the common or system clock. The requirement is phase and frequency stability of an adequate quality. A suitable on-air clock could for example be a standard frequency transmission or a local television transmission and a suitable wired clock could be a 500 Hz sync signal, an ISDN 64 or 8 kHz derived clock or possibly, with suitable conditioning, local mains even with different phases. Whatever the prime clock is, its output is scaled to produce a synchronisation input to the base unit, the phase of which can be adjusted when a master transmission is detected.

When the master transmission is available, any base unit able to receive it can adjust the phase of its derived synchronising clock such that the base unit would transmit in exactly the same phase as the received master transmission. The base unit must obviously possess the ability to receive the master transmission in order to be able to derive the timing information. Once this has been performed the base unit's derived synchronisation clock is in correct phase relationship to the master transmission. All other base units which have performed the same operation would also be in synchronisation. The phase relationship will be maintained by the base unit provided the clock is consistent. For a dispersed system some base units will be out of range of the master base unit but in range of other base units. In this situation a base unit which has achieved synchronisation from the master base unit can act as a secondary master base unit to provide a timing signal for some or all of the remaining base units. This process can be repeated to extend the network and the build up of phase errors is in fact unimportant as synchronisation is most accurate between base units in range. The optimum master base unit would normally be the base unit in range of the greatest number of other base units.

Our particular implementation uses CT2 CAI with a 2 ms frame, a wired system clock derived from a digital 2B+D interface which carries a PCM 64 kHz clock which is divided down to 500 Hz. On command from a central controller one base unit is selected and transmits a master beacon in MUX2 and the other base units listen to the beacon in effectively a "handset" mode (they would not normally listen to a base unit in base unit mode). They then set the phase of the derived 500 Hz clock signal such that they would transmit in synchronism with the MUX2 signal currently being received. Control refinements for dispersed sites and optimum selection of the master and secondary master base units may also be implemented.

A diagram illustrating this implementation is given in Figure 4. Figure 4 shows an illustrative system comprising a pair of base units 14,15 connected by respective hard-wired connections 16,17 to an ISDN PBX 18 which is itself connected to the external telephone system at connection 10. Each base unit 14,15 comprises a respective ISDN interface and controller 19,20, transceiver 21,22, and clock 23,24.

In this case the common clock is derived from PBX 18 and delivered to both base units via the respective hard-wire connections 16,17. The common clock controls the frequency of the local clocks 23,24.

As described above, one of the base units, in this case the base unit 14, is the master base unit and is used to provide a master transmission in MUX2 from which the other base unit, unit 15, can obtain synchronisation of its local derived clock 24. The other (slave) base unit 15 receives the master transmission via its transceiver 22 in effectively a "handset" mode. The transceiver 22 in turn issues a timing signal on line 25 to a synchronising circuit 26. The synchronising circuit 26 generates a timing reset signal on line 27 which acts to adjust the start time of the 500 Hz clock 24 to correspond to the timing signal received on line 25 when the transceiver 22 is receiving the master transmission. The timing reset is only applied to the clock 24 if a command signal is present on line 28 from the controller 20.

The synchronising circuit 26 is shown in greater detail in Figure 5. In Figure 5, the principal input/output signals are named as follows:
Timing signal from transceiver 22 = Signal SYNCBML
Timing Reset to 500 Hz clock 24 = Signal SYNCCAL
Command signal from interface and controller 20 = Signal CAL500

The synchronising circuit comprises a D-type flip flop 29 which receives the CAL500 and SYNCBML signals at its D and clock inputs respectively. The Q output of flip flop 29 is passed to the enable input of a ripple counter 30.

The operation is as follows:

The Burst Mode Logic (BML) circuit within the transceiver 22 generates an output which is a 500 Hz square wave. When the transceiver is in handset mode (see above) the waveform is directly related to the timing of the received signal from the master base unit 14. This 500 Hz square wave is applied as SYNCBML to the sync circuit.

When the controller determines that a satisfactory signal is being received in the handset mode it sets the command signal CAL500 into the sync circuit. This activates the output from the D type flip flop 29 which in turn enables the ripple counter 30. The ripple counter 30 uses the radio system's own 1.44 MHz clock, applied at terminal 31, to introduce a small delay in the rising edge of the Q output from the flip flop 29. This delay is needed to adjust the timing from the SYNCBML signal to that required for the synchronising signal when used in the normal base unit mode. The delay is about 6.94µS in this implementation. The Ripple counter Carry Output (RCO) generates a pulse (of one cycle of 1.44 MHz) when the counter 30 carries over, which is when a count of 10 clock cycles has occurred [(1/1.44) x 10 = 6.94]. The value of 10 is a pre-loaded value determined by the fixed inputs ABCD and which is set by the LD input.

The short pulse generated at output RCO is applied to a further D type flip flop 32, in which the signal is in effect re-timed and buffered by means of the 1.44 MHz clock. The output is then applied as a reset signal SYNCCAL to the clock 24 which generates the 500 Hz signal which is used to synchronise the transceiver when in the normal base unit mode.

The 500 Hz clock 24 is actually a counter dividing down the 64 kHz digital bus clock to 500 Hz. The phase of this 64 kHz signal is irrelevant and substantially unrelated to the 500 Hz signal but its frequency is exactly related as 128 to 1. The derived 500 Hz clock signal is phase adjusted by the reset action on its divider so that its edges coincide with the timing derived by the Sync Circuit 26.

When the radio system resumes normal mode it runs synchronous with the 500 Hz from the 500 Hz clock. This is now exactly the timing required to coincide with the original master base unit transmission. The system has therefore been Snapshot synchronised and will continue to be in synchronism provided the whole system is derived from a common 64 kHz central clock.

In the above description we have used the 64 kHz clock of the digital bus but any commonly derivable frequency source which can be used to synthesise 500 Hz to a sufficient accuracy (up to +/-50 ppm) would provide a system wide frequency source. This could for example be a standard radio frequency transmission received as a radio signal by each radio head independently. This would allow a synchronisation mode in systems which cannot be supplied by a wired central clock such as analogue wired telepoint systems.

## Claims

1. A duplex communications system for establishing radio transmission and reception between one of a plurality of portable units (2,3) and one or more of a plurality of base units (14,15), said system comprising means for generating a synchronising signal operable to synchronise the operation of the base units (14,15), the system being characterised by means for generating a first synchronising signal operable to control the frequency of operation of the base units and a second synchronising signal operable to control the phase of the base unit transmission.

2. A duplex communications system as claimed in claim 1 wherein said first synchronising signal is not in a known phase relationship with the transmission of any one or more of said base units.

3. A duplex communications system as claimed in either one of claims 1 or 2 wherein said first synchronising signal has different relative phases at different base units.

4. A system as claimed in any one of the preceding claims wherein at least one of the base units acts as a master base unit (14), to which the other base units become slave base units, and is operable to produce said second synchronising signal.

5. A system as claimed in claim 4 wherein said second synchronising signal is transmitted from said master base unit (14) or units.

6. A system as claimed in any one of the preceding claims wherein said means for generating said first synchronising signal comprises a hard-wired system clock.

7. A system as claimed in any one of claims 1 to 5 wherein said means for generating said first synchronising signal comprises means for receiving an on-air clock signal such as a standard frequency transmission or a local television transmission.

8. A system as claimed in any one of claims 1 to 5 wherein said first synchronising signal comprises a local mains electricity supply signal.

9. A system as claimed in either one of claims 4 or 5 wherein each master base unit includes means for being converted to a slave base unit and vice versa, and wherein each slave base unit includes means for being converted to a master base unit and vice versa.

10. A system as claimed in claim 9 comprising a plurality of base units some of which are out of range of one another, wherein one or more of said slave base units within range of a master base unit become secondary master base units each of which is operable to transmit said second synchronising signal to all base units within its range, at least some of which are out of range of the master base unit.

11. A method of synchronising a plurality of base units of a duplex communications system for establishing radio transmission and reception between one of a plurality of portable units (2,3) and one or more of the plurality of base units (14,15), said method comprising the steps of generating a first synchronising signal operable to control the frequency of operation of the base units (14,15) and generating a second synchronising signal separate from the first, said second signal being operable to control the phase of transmissions of the base units (14,15).

12. A method according to claim 11 wherein said system comprises a plurality of base units (14,15) some of which are out of range of one another, said method comprising transmitting said second signal from at least one of the base units which acts as a master base unit (14), to which the other base units become slave base units, synchronising said slave base units within range of said master base unit (14) or units in accordance with said second synchronising signal, retransmitting said second synchronising signal from one or more of the synchronised slave base units so that at least some of those slave bases which were not synchronised originally by the master base unit (14) or units transmitted signal may be synchronised by the retransmitted second synchronising signal, optionally again retransmitting said second synchronising signal from other slave base units synchronised in accordance with said second synchronising signal either as originally transmitted from a master base unit (14) or as retransmitted, and repeating this process until all said base units are operating substantially in synchronisation with one another.

## Patentansprüche

1. Duplex-Nachrichtenverbindungssystem zum Herstellen einer HF-Übertragung und Empfangen zwischen einer Vielzahl von tragbaren Einheiten (2, 3) und einer oder mehreren aus einer Vielzahl von Basis-Einheiten (14, 15), mit einer Vorrichtung zur Erzeugung eines Synchronisiersignals, das so betrieben werden kann , daß der Betrieb der Basis-Einheiten (14, 15) synchronisiert wird, **gekennzeichnet durch** eine Vorrichtung zur Erzeugung eines ersten Synchronisiersignals, das so betrieben werden kann, daß die Frequenz des Betriebes der Basis-Einheiten gesteuert wird, sowie eines zweiten Synchronisiersignals, das so betrieben werden kann, daß die Phasenlage der Übertragung der Basis-Einheit gesteuert wird.

2. System nach Anspruch 1, bei dem das erste Synchronisiersignal nicht in einer bekannten Phasenbeziehung zu der Übertragung einer oder mehrerer Basis-Einheiten steht.

3. System nach Anspruch 1 oder 2, bei dem das erste Synchronisiersignal unterschiedliche relative Phasenlagen an unterschiedlichen Basis-Einheiten hat.

4. System nach einem der vorausgehenden Ansprüche, bei dem mindestens eine der Basis-Einheiten als eine Master-Basis-Einheit (14) arbeitet, zu der die anderen Basis-Einheiten Hilfs-Basis-Einheiten werden, und so betrieben werden kann, daß das zweite Synchronisiersignal erzeugt wird.

5. System nach Anspruch 4, bei dem das zweite Synchronisiersignal aus der Master-Basis-Einheit (14) oder -Einheiten übertragen wird.

6. System nach einem der vorausgehenden Ansprüche, bei dem die Vorrichtung zur Erzeugung des ersten Synchronisiersignals einen fest verdrahteten System-Taktgeber darstellt.

7. System nach einem der Ansprüche 1 - 5, bei dem die Vorrichtung zur Erzeugung des ersten Synchronisiersignals eine Vorrichtung zur Aufnahme eines sende- und empfangsbereiten (on-air) Taktsignals, z.B. einer Standard-Frequenz-Übertragung oder einer lokalen Fernseh-Übertragung aufweist.

8. System nach einem der Ansprüche 1 - 5, bei dem das erste Synchronisiersignal ein Signal einer lokalen Netzspeisequelle ist.

9. System nach einem der Ansprüche 4 oder 5, bei dem die Master-Basis-Einheit eine Vorrichtung zur Umwandlung in eine Hilfs-Basis-Einheit und umgekehrt, und jede Hilfs-Basis-Einheit eine Vorrichtung zur Umwandlung in eine Master-Basis-Einheit und umgekehrt aufweist.

10. System nach Anspruch 9, mit einer Vielzahl von Basis-Einheiten, von denen einige sich außer Reichweite voneinander befinden, wobei eine oder mehrere der Hilfs-Basis-Einheiten innerhalb der Reichweite einer Master-Basis-Einheit zu sekundären Master-Basis-Einheiten werden, von denen jede so betrieben werden kann, daß sie das zweite Synchronisiersignal an alle Basis-Einheiten innerhalb dieser Reichweite überträgt, wobei mindestens einige davon sich außer Reichweite der Master-Basis-Einheit befinden.

11. Verfahren zum Synchronisieren einer Vielzahl von Basis-Einheiten eines Duplex-Nachrichtensystems zum Herstellen von HF-Übertragung und -Empfang zwischen einer aus einer Vielzahl von tragbaren Einheiten (2, 3) und einer oder mehreren der Vielzahl von Basis-Einheiten (14, 15), dadurch gekennzeichnet, daß ein erstes Synchronisiersignal erzeugt wird, das so betrieben werden kann, daß es die Betriebsfrequenz der Basis-Einheiten (14, 15) steuert, und daß ein zweites Synchronisiersignal getrennt von dem ersten Signal erzeugt wird, das so betrieben werden kann, daß es die Phasenlage von Übertragungen der Basis-Einheiten (14, 15) steuert.

12. Verfahren nach Anspruch 11, bei dem das System eine Vielzahl von Basis-Einheiten (14, 15) aufweist, von denen einige sich außer Reichweite voneinander befinden, dadurch gekennzeichnet, daß das zweite Signal von mindestens einer der Basis-Einheiten übertragen wird, die als Master-Basis-Einheit (14) arbeitet, zu der die anderen Basis-Einheiten Hilfs-Basis-Einheiten werden, daß die Hilfs-Basis-Einheiten innerhalb des Bereiches der Master-Basis-Einheit (14) bzw. -Einheiten entsprechend mit dem zweiten Synchronisiersignal synchronisiert werden, daß das zweite Synchronisiersignal von einer oder mehreren der synchronisierten Hilfs-Basis-Einheiten erneut übertragen wird, so daß mindestens einige dieser Hilfs-Basis-Einheiten, die nicht ursprünglich durch das von der bzw.den Master-Basis-Einheit (14) bzw Einheiten übertragene Signal synchronisiert waren, durch das erneut übertragene zweite Synchronisiersignal synchronisiert werden können, daß wahlweise das zweite Synchronisiersignal von anderen Hilfs-Basis-Einheiten entsprechend dem zweiten Synchronisiersignal entweder als von einer Master-Basis-Einheit (14) ursprünglich übertragenes oder als erneut übertragenes Signal nochmals übertragen wird, und daß dieser Vorgang solange wiederholt wird, bis alle Basis-Einheiten im wesentlichen synchron miteinander arbeiten.

## Revendications

1. Système de communications duplex pour établir une transmission et une réception radio entre une unité portable parmi une pluralité d'unités portables (2, 3) et une ou plusieurs unités de base parmi une pluralité d'unités de base (14, 15), ledit système comprenant des moyens pour générer un signal de synchronisation pouvant être actionné pour synchroniser le fonctionnement des unités de base (14, 15), le système étant caractérisé par des moyens pour générer un premier signal de synchronisation pouvant être actionné pour commander la fréquence de fonctionnement des unités de base et un deuxième signal de synchronisation pouvant être actionné pour commander la phase de la transmission d'unité de base.

2. Système de communications duplex selon la revendication 1, dans lequel ledit premier signal de synchronisation n'est pas dans une relation de phase connue avec la transmission de l'une quelconque ou de plusieurs quelconques desdites unités de base.

3. Système de communications duplex selon l'une ou l'autre des revendications 1 ou 2, dans lequel ledit premier signal de synchronisation a des phases relatives différentes au niveau des différentes unités de base.

4. Système selon l'une quelconque des revendications précédentes, dans lequel au moins l'une des unités de base agit comme une unité de base maître (14), pour laquelle les autres unités de base deviennent des unités de base esclaves et peut être actionnée pour produire ledit deuxième signal de synchronisation.

5. Système selon la revendication 4, dans lequel ledit deuxième signal de synchronisation est transmis à partir de ladite unité (14) ou desdites unités de base maître(s).

6. Système selon l'une quelconque des revendications précédentes, dans lequel lesdits moyens pour générer ledit premier signal de synchronisation comprennent une horloge de système câblée.

7. Système selon l'une quelconque des revendications 1 à 5, dans lequel lesdits moyens pour générer ledit premier signal de synchronisation comprennent des moyens pour recevoir un signal d'horloge hertzien tel qu'une transmission de fréquence standard ou une transmission de télévision locale.

8. Système selon l'une quelconque des revendications 1 à 5, dans lequel ledit premier signal de synchronisation comprend un signal d'alimentation du secteur électrique local.

9. Système selon l'une ou l'autre des revendications 4 ou 5, dans lequel chaque unité de base maître comporte des moyens pour être convertie en unité de base esclave et inversement et dans lequel chaque unité de base esclave comporte des moyens pour être convertie en unité de base maître et inversement.

10. Système selon la revendication 9, comprenant une pluralité d'unités de base, certaines d'entre elles étant hors de portée les unes des autres, dans lequel une ou plusieurs desdites unités de base esclaves à portée d'une unité de base maître deviennent des unités de base maître secondaires, chacune d'entre elles pouvant être actionnée pour transmettre ledit deuxième signal de synchronisation à l'ensemble des unités de base à sa portée, au moins certaines d'entre elles étant hors de portée de l'unité de base maître.

11. Procédé de synchronisation d'une pluralité d'unités de base d'un système de communication duplex pour établir une transmission et une réception radio entre une unité portable parmi une pluralité d'unités portables (2, 3) et une ou plusieurs unités de base parmi la pluralité d'unités de base (14, 15), ledit procédé comprenant les étapes consistant à générer un premier signal de synchronisation pouvant être actionné pour commander la fréquence de fonctionnement des unités de base (14, 15) et à générer un deuxième signal de synchronisation séparé du premier, ledit deuxième signal pouvant être actionné pour commander la phase des transmissions des unités de base (14, 15).

12. Procédé selon la revendication 11, dans lequel ledit système comprend une pluralité d'unités de base (14, 15), certaines d'entre elles étant hors de portée les unes des autres, ledit procédé comprenant la transmission dudit deuxième signal à partir d'au moins l'une des unités de base agissant comme une unité de base maître (14) dont les autres unités de base deviennent des unités de base esclaves, la synchronisation desdites unités de base esclaves à la portée de ladite ou desdites unités de base maître (14) selon ledit deuxième signal de synchronisation, la retransmission dudit deuxième signal de synchronisation à partir d'une ou plusieurs des unités de base esclaves synchronisées de façon qu'au moins certaines de ces unités de base esclaves qui n'étaient pas synchronisées à l'origine par le signal transmis par l'unité ou les unités de base maître (14) puissent être synchronisées par le deuxième signal de synchronisation retransmis, la retransmission optionnelle à nouveau dudit deuxième signal de synchronisation à partir d'autres unités de base esclaves synchronisées en fonction dudit deuxième signal de synchronisation, soit tel qu'il est transmis à l'origine depuis une unité de base maître (14), soit tel qu'il est retransmis, et la répétition de ce processus jusqu'à ce que l'ensemble desdites unités de base fonctionnent sensiblement en synchronisation les unes avec les autres.
